# EUROPEAN PATENT APPLICATION

(11) **EP 4 389 825 A1**
(43) Date of publication of application: **26.06.2024**
(21) Application number: 22860257.9
(22) Date of filing: 11.08.2022
(51) Int. Cl.: C08L 69/00, C08K 3/22

(54) **PC RESIN MATERIAL WITH NEUTRAL FILTERING EFFECT, AND PREPARATION METHOD THEREFOR AND USE THEREOF**

(30) Priority: 23.08.2021 CN 202110971014
(71) Applicant: KINGFA SCI. & TECH. CO., LTD., Guangzhou, Guangdong 510663 (CN)
(72) Inventor: ZHANG, Xiong, Guangzhou, Guangdong 510663 (CN); JING, Xinke, Guangzhou, Guangdong 510663 (CN); HUANG, Xianbo, Guangzhou, Guangdong 510663 (CN); YE, Nanbiao, Guangzhou, Guangdong 510663 (CN); CHEN, Pingxu, Guangzhou, Guangdong 510663 (CN); ZENG, Sai, Guangzhou, Guangdong 510663 (CN); LI, Hanchun, Guangzhou, Guangdong 510663 (CN); ZHAO, Qingzong, Guangzhou, Guangdong 510663 (CN); CHEN, Yue, Guangzhou, Guangdong 510663 (CN); ZHOU, Qi, Guangzhou, Guangdong 510663 (CN)
(74) Representative: dompatent von Kreisler Selting Werner - Partnerschaft von Patent- und Rechtsanwälten mbB
(86) International application number: PCT/CN2022/111602
(87) International publication number: WO 2023/024911

(57) **Abstract**

The invention relates to a PC resin material with a neutral filtering effect, and a preparation method therefor and the use thereof. The PC resin material with a neutral filtering effect provided in the present invention comprises polycarbonate, an antioxidant, a dispersing agent and an additive. The PC resin material with a neutral filtering effect provided in the present invention has a flat transmittance curve at a spectral band of 400-1000 nm, a better neutral filtering effect and the advantages of easy machinability and low costs, and can be widely applied to the preparation of optical products.

## Description

### TECHNICAL FIELD

The present invention belongs to the technical field of plastic products, and specifically relates to a PC resin material with a neutral filtering effect, a preparation method therefor and a use thereof.

### RELATED ART

When camera equipment is used to take images, in order to prevent overexposure, a neutral optical filter is installed on a camera lens to achieve the effect of filtering light. The effect of filtering light is non-selective, and that is to say, the neutral optical filter has an equivalent and uniform ability to reduce a variety of light with different wavelengths, which only achieves the effect of weakening the light and has no effect on the color of an original object, so that the contrast of scenery can be truly reproduced.

According to a patent CN105523713A, a preparation method for an optical glass filter based on a silicate glass composition is disclosed. The optical glass filter is obtained by adding three substances, including NiO, MnO₂ and Co₂O₃, based on the silicate glass composition, such that the composition is endowed with flat spectral transmission characteristics at a band of 450-650 nm. However, the band is only in a range of 200 nm and is narrow. In addition, as can be seen from an external transmittance and an internal transmittance, the transmittance still has a certain fluctuation in the band of 450-650 nm. Moreover, a flat transmittance curve is not achieved at 400-450 nm, and the transmittance at a wavelength of 650-1,000 nm is also not considered. Meanwhile, the optical glass filter has a complicated processing procedure and a high cost, which cannot meet diversified needs of customers.

Therefore, the development of a novel filtering material with more excellent flat spectral transmission characteristics at a wider band, a simple processing procedure and a low cost has great research significance and an application value.

### SUMMARY OF INVENTION

The purposes of the present invention are to overcome the defects or disadvantages of poor flat spectral transmission characteristics, narrow suitable bands, complicated processing procedures and high costs of optical filters in the prior art, and to provide a PC resin material with a neutral filtering effect. The PC resin material with a neutral filtering effect provided in the present invention has a flat transmittance curve at a spectral band of 400-1,000 nm, a better neutral filtering effect and the advantages of easy processability and low cost, and can be widely used in preparation of optical products, such as filters, cameras or digital cameras.

Another purpose of the present invention is to provide a preparation method for the PC resin material with a neutral filtering effect.

Another purpose of the present invention is to provide use of the PC resin material with a neutral filtering effect in preparation of optical products.

In order to realize the purposes of the present invention, the following technical solutions are adopted in the present invention:
A PC resin material with a neutral filtering effect includes the following components in parts by weight:
100 parts of polycarbonate;
0.08-1.1 parts of an antioxidant;
0.08-1.1 parts of a dispersing agent; and
0.02-0.08 part of an additive;
where the additive is a mixture of CuCr₂O₄ and Cᵣ₂O₃, the weight ratio of the CuCr₂O₄ to the Cr₂O₃ in the mixture is (1-10):1, and the CuCr₂O₄ has a D50 particle size of 0.1-1.1 µm.

In the present invention, the polycarbonate (PC) is used as a basis system, and the mixture obtained by compounding the CuCr₂O₄ with a specific particle size and the Cr₂O₃ is used as the additive, so that the polycarbonate system can have a stable transmittance at a spectral band of 400-1,000 nm, the transmittance fluctuation is less than 10%, and a transmittance curve tends to be parallel; and in addition, the PC resin material has a simple processing procedure, high efficiency and a low cost, and can be widely used in preparation of optical products (such as filters, cameras or digital cameras).

Conventional polycarbonates, antioxidants and dispersing agents in the art can be used in the present invention.

Preferably, the polycarbonate has a melting index of 10-20 g/10 min at a temperature of 300°C and a load of 1.2 kg, and according to an ISO 13468-2-1999 standard, the polycarbonate has a transmittance of not less than 90% at a thickness of 3 mm, preferably in a range of 90%-93%.

Preferably, the antioxidant includes one or more of a phenolic antioxidant and a phosphite antioxidant.

More preferably, the phenolic antioxidant includes one or two of octadecyl β-(3,5-di-tert-butyl-4-hydroxyphenyl)propionate (1076) and pentaerythritol tetrakis[β-(3,5-di-tert-butyl-4-hydroxyphenyl)propionate] (1010).

More preferably, the phosphite antioxidant includes one or two of tri(2,4-di-tert-butylphenyl)phosphite (168) and bis(2,6-di-tert-butyl-4-methylphenyl)pentaerythritol diphosphite (PEP-36).

Further preferably, the antioxidant includes 1076 and 168, and the weight ratio of the 1076 to the 168 is 1: 1.

Preferably, the dispersing agent includes one or more of sodium dodecyl sulfate, methyl pentanol, triethylhexyl phosphate, polyacrylamide, cellulose derivatives, ethylene bis(stearamide), stearate, guar gum and fatty acid polyethylene glycol ester.

Preferably, the Cr₂O₃ has a D50 particle size of 0.3-0.8 µm; and further preferably, the D50 particle size is 0.45-0.55 µm.

Preferably, the CuCr₂O₄ in the additive has a D50 particle size of 0.6-0.8 µm.

Preferably, the weight ratio of the CuCr₂O₄ to the Cr₂O₃ in the additive is (8-9): 1.

The preparation method for the PC resin material with a neutral filtering effect includes the following steps: mixing the polycarbonate, the antioxidant, the dispersing agent and the additive, and performing melt extrusion and granulation to obtain the PC resin material with a neutral filtering effect.

Preferably, the preparation method for the PC resin material with a neutral filtering effect includes the following steps: mixing polymethyl methacrylate, the antioxidant, the dispersing agent and the additive in a high-speed mixing machine for 3-5 min to obtain a uniformly mixed material; and putting the uniformly mixed material into a twin-screw extruder, and performing mixing, melting, homogenization and extrusion granulation, followed by cooling to obtain a PMMA resin material; where extrusion screws of the twin-screw extruder have a length-diameter ratio of (40-65): 1, a cylinder of the extruder is at 260-290°C, and a main machine has a rotation speed of 600-900 r/min.

The preparation method for the PC resin material with a neutral filtering effect provided in the present invention has a simple processing technology and a low cost, which can meet diversified needs of customers.

The use of the PC resin material with a neutral filtering effect in preparation of optical products is also in the scope of protection of the present invention.

Specifically, the PC resin material with a neutral filtering effect can be widely used in preparation of products, such as filters, cameras or digital cameras.

Compared with the prior art, the present invention has the following beneficial effects:
In the present invention, the polycarbonate (PC) is used as a basis system, and the specific additive is added, so that the polycarbonate system can have a stable transmittance at a spectral band of 400-1,000 nm, the transmittance fluctuation is less than 10%, and a transmittance curve tends to be parallel; and in addition, the PC resin material has a simple processing procedure, high efficiency and a low cost, and can be widely used in preparation of optical products.

### DESCRIPTION OF EMBODIMENTS

The present invention is further elaborated below in combination with examples. These examples are used only to illustrate the present invention, rather than to limit the scope of the present invention. Experimental methods without specific conditions in the following examples are usually used in accordance with conventional conditions in the art or conditions as recommended by manufacturers; and all raw materials and reagents used, unless otherwise specified, are raw materials and reagents that can be obtained from conventional markets and other commercial approaches. Any non-substantial changes and substitutions made by a person skilled in the art on the basis of the present invention fall within the scope of protection of the present invention.

Some reagents used in examples and comparative examples of the present invention are described as follows:
Polycarbonate 1# was PC CLS3400, which was low-viscosity polycarbonate, had 14 g/10 min at a temperature of 300°C and a load of 1.2 kg, had a transmittance of 93% at a thickness of 3 mm according to an ISO 13468-2-1999 standard, and was purchased from Mitsubishi of Japan;
Polycarbonate 2# was LUPOY PC 1300-30, which had 30 g/10 min at a temperature of 300°C and a load of 1.2 kg, had a transmittance of 89% at a thickness of 3 mm according to an ISO 13468-2-1999 standard, and was purchased from LG of Korea.
An antioxidant was a phosphite antioxidant, which was antioxidant 168, and was purchased from Tianjin Rianlon New Material Co., Ltd; A hindered phenolic antioxidant was antioxidant 1076, and was purchased from Tianjin Rianlon New Material Co., Ltd;
A dispersing agent was stearate, namely GLYCOLUBE-P, which was purchased from Lonza of the United States of America;
CuCr₂O₄ 1# had a D50 particle size of 0.6 µm;
CuCr₂O₄ 2# had a D50 particle size of 0.1 µm;
CuCr₂O₄ 3# had a D50 particle size of 1.1 µm;
CuCr₂O₄ 4# had a D50 particle size of 2 µm;
Cr₂O₃ 1# had a D50 particle size of 0.5 µm;
Cr₂O₃ 2# had a D50 particle size of 0.3 µm;
Cr₂O₃ 3# had a D50 particle size of 0.8 µm;
Additives, including OP-1-1# to OP-1-8#, were specifically prepared as follows;
OP-1-1# was prepared by mixing CuCr₂O₄ 1# and Cr₂O₃ 1# at a ratio of 9:1 (weight ratio, same below);
OP-1-2# was prepared by mixing CuCr₂O₄ 1# and Cr₂O₃ 1# at a ratio of 10:1;
OP-1-3# was prepared by mixing CuCr₂O₄4 1# and Cr₂O₃1# at a ratio of 1:1;
OP-1-4# was prepared by mixing CuCr₂O₄ 2# and Cr₂O₃ 1# at a ratio of 9:1;
OP-1-5# was prepared by mixing CuCr₂O₄ 3# and Cr₂O₃ 1# at a ratio of 9:1;
OP-1-6# was prepared by mixing CuCr₂O₄ 1# and Cr₂O₃ 2# at a ratio of 9:1;
OP-1-7# was prepared by mixing CuCr₂O₄ 1# and Cr₂O₃ 3# at a ratio of 9:1;
OP-1-8# was prepared by mixing CuCr₂O₄ 4# and Cr₂O₃ 1# at a ratio of 9:1;
OP-1-9# was prepared by mixing CuCr₂O₄ 1# and Cr₂O₃ 1# at a ratio of 1:9;
OP-1-10# was prepared by mixing CuCr₂O₄ 1# and Cr₂O₃ 1# at a ratio of 12:1;
Aniline black was TN-870, which was purchased from Orient of Japan, and had a D50 particle size of 0.2 µm;;
Carbon black was M717, which was purchased from Cabot of the United States of America, and had a D50 particle size of 22 nm;;
A compound colorant was prepared by mixing a red powder, a blue powder, a green powder and a yellow powder at a ratio of 0.7:10:10:0.3, where
the red powder was iron oxide red purchased from Bayer of Germany, and had a D50 particle size of 0.3 µm;
the green powder was cobalt green purchased from Zhongshan Huashan High-tech Ceramic Material Co., Ltd., and had a D50 particle size of 0.8 µm;
the blue powder was cobalt blue purchased from Guangzhou Changjin New Material Technology Co., Ltd., and had a D50 particle size of 0.8 µm;
and the yellow powder was bismuth vanadate yellow purchased from DCC of Canada, and had a D50 particle size of 0.8 µm;
PC resin materials in examples and comparative examples of the present invention were prepared in the following processes:
   weighing various raw materials according to requirements, and mixing the raw materials for 3-5 min to obtain a uniformly mixed material; and putting the uniformly mixed material into a twin-screw extruder, and performing mixing, melting, homogenization and extrusion granulation, followed by cooling to obtain the PC resin materials; where extrusion screws of the twin-screw extruder had a length-diameter ratio of 52:1, a cylinder of the extruder was at 265°C, and a main machine had a rotation speed of 650 r/min.

A method for testing the transmittance of the PC resin materials in the examples and comparative examples of the present invention includes:
subjecting granulated resin to injection molding to obtain a sample with a thickness of 1 mm, and testing the transmittance by a HunterLab-UltraScan VIS dual optical path spectrophotometer of Q-lab of the United States of America.

The transmittance fluctuation is a difference between a maximum transmittance and a minimum transmittance at different wavelengths.

### Examples 1-10

The present examples provide a series of PC resin materials with a neutral filtering effect. Formulas are shown in Table 1.

**Table 1 Formulas in Examples 1-10 (part)**

| Example | 1 | 2 | 3 | 4 | 5 | 6 | 7 | 8 | 9 | 10 |
|---|---|---|---|---|---|---|---|---|---|---|
| Polycarbonate 1# | 100 | 100 | 100 | 100 | 100 | 100 | 100 | / | 100 | 100 |
| Polycarbonate 2# | / | / | / | / | / | / | / | 100 | / | / |
| Antioxidant 168 | 0.1 | 0.1 | 0.1 | 0.1 | 0.1 | 0.1 | 0.1 | 0.1 | 0.04 | 0.55 |
| Antioxidant 1076 | 0.1 | 0.1 | 0.1 | 0.1 | 0.1 | 0.1 | 0.1 | 0.1 | 0.04 | 0.55 |
| Dispersing agent | 0.2 | 0.2 | 0.2 | 0.2 | 0.2 | 0.2 | 0.2 | 0.2 | 1.1 | 0.08 |
| OP-1-1# | 0.06 | / | / | / | / | / | / | 0.06 | 0.02 | 0.08 |
| OP-1-2# | / | 0.06 | / | / | / | / | / | / | / | / |
| OP-1-3# | / | / | 0.06 | / | / | / | / | / | / | / |
| OP-1-4# | / | / | / | 0.06 | / | / | / | / | / | / |
| OP-1-5# | / | / | / | / | 0.06 | / | / | / | / | / |
| OP-1-6# | / | / | / | / | / | 0.06 | / | / | / | / |
| OP-1-7# | / | / | / | / | / | | 0.06 | / | / | / |

### Comparative Examples 1-8

The present comparative examples provide a series of PC resin materials. Formulas are shown in Table 2.

**Table 2 Formulas in Comparative Examples 1-8 (part)**

| Comparative Example | 1 | 2 | 3 | 4 | 5 | 6 | 7 | 8 |
|---|---|---|---|---|---|---|---|---|
| Polycarbonate 1# | 100 | 100 | 100 | 100 | 100 | 100 | 100 | 100 |
| Antioxidant 168 | 0.1 | 0.1 | 0.1 | 0.1 | 0.1 | 0.1 | 0.1 | 0.1 |
| Antioxidant 1076 | 0.1 | 0.1 | 0.1 | 0.1 | 0.1 | 0.1 | 0.1 | 0.1 |
| Dispersing agent | 0.2 | 0.2 | 0.2 | 0.2 | 0.2 | 0.2 | 0.2 | 0.2 |
| OP-1-1# | / | / | / | / | / | / | / | 0.2 |
| OP-1-8# | / | 0.06 | / | / | / | / | / | / |
| OP-1-9# | / | / | 0.06 | / | / | / | / | / |
| OP-1-10# | / | / | / | 0.06 | / | / | / | / |
| Aniline black | / | / | / | / | / | 0.06 | / | / |
| Carbon black | / | / | / | / | 0.06 | / | | / |
| Compound colorant | / | / | / | / | / | / | 0.06 | / |

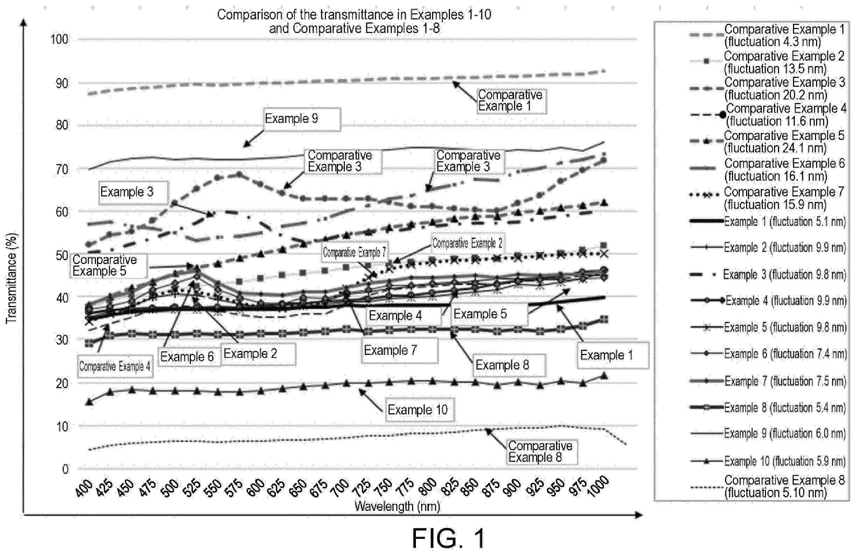

Properties of the PC resin materials provided in the examples and comparative examples were tested by a property test method described above. Results are shown in FIG. 1. Meanwhile, Transmittance values of the PC resin material provided in Example 1 are shown in Table 3 and Table 4.

**Table 3 Transmittance values and transmittance fluctuation values of PC resin materials provided in Examples 1-10**

| | | Examp le 1 | Examp le 2 | Examp le 3 | Examp le 4 | Examp le 5 | Examp le 6 | Examp le 7 | Examp le 8 | Examp le 9 | Examp le 10 |
|---|---|---|---|---|---|---|---|---|---|---|---|
| Transmitta nce at different wavelength s | 400 nm | 34.8 | 35.1 | 50.2 | 36.2 | 35.9 | 36.9 | 38.4 | 29.2 | 69.7 | 15.5 |
| | 425 nm | 35.7 | 36.4 | 50.9 | 36.9 | 36.9 | 37.8 | 39.7 | 30.9 | 71.6 | 17.9 |
| | 450 nm | 36.5 | 37.7 | 52.3 | 37.1 | 36.8 | 39.1 | 41 | 31.5 | 72.3 | 18.3 |
| | 475 nm | 36.8 | 39.9 | 53.7 | 37.3 | 37.1 | 41.5 | 43.6 | 31.1 | 72.4 | 18.2 |
| | 500 nm | 36.9 | 40.6 | 55.3 | 37.4 | 37 | 43.1 | 45.2 | 31.2 | 71.9 | 18.1 |
| | 525 nm | 36.9 | 40.2 | 57.1 | 37.4 | 36.9 | 44.7 | 46 | 31.3 | 72.2 | 18 |
| | 550 nm | 36.9 | 39.3 | 59.9 | 37.6 | 36.5 | 41.5 | 43.2 | 31.1 | 72.1 | 17.9 |
| | 575 nm | 36.9 | 38.3 | 59.4 | 37.5 | 37.1 | 39.8 | 40.9 | 31.2 | 72 | 17.8 |
| | 600 nm | 36.9 | 37.6 | 57.3 | 37.8 | 37.4 | 38.6 | 40.5 | 31.5 | 72.2 | 18 |
| | 625 | 37.1 | 37.9 | 54.2 | 38.3 | 37.6 | 38.4 | 40.3 | 31.5 | 72.6 | 18.6 |
| | nm | | | | | | | | | | |
| | 650 nm | 37.4 | 38.3 | 52.9 | 38.5 | 37.8 | 39.7 | 41 | 31.7 | 73.1 | 19.1 |
| | 675 nm | 37.6 | 39.1 | 53.4 | 38.9 | 38.2 | 39.6 | 41.1 | 31.8 | 73.6 | 19.3 |
| | 700 nm | 37.9 | 40.7 | 54.6 | 39.1 | 38.7 | 40.8 | 42.2 | 32.4 | 73.9 | 20 |
| | 725 nm | 37.8 | 41.2 | 55.1 | 39.4 | 38.8 | 41.7 | 43 | 32 | 74.1 | 19.9 |
| | 750 nm | 38.1 | 41.9 | 55.2 | 40.1 | 39.5 | 42.6 | 43.7 | 32.2 | 74.3 | 20.1 |
| | 775 nm | 38.1 | 42.3 | 55.9 | 40.3 | 39.8 | 42.7 | 44.4 | 32.5 | 74.9 | 20.5 |
| | 800 nm | 38.1 | 42.9 | 56.4 | 40.9 | 40.1 | 43.1 | 44.4 | 32.5 | 74.7 | 20.3 |
| | 825 nm | 38.1 | 43.1 | 56.8 | 41.4 | 40.5 | 43.3 | 44.7 | 32.3 | 74.5 | 20.2 |
| | 850 nm | 38 | 43.7 | 57.3 | 42.1 | 41.2 | 43.2 | 44.9 | 32.4 | 74.4 | 20.2 |
| | 875 nm | 38.4 | 44.1 | 57.1 | 42.9 | 41.6 | 42.8 | 44.4 | 31.9 | 73.9 | 19.4 |
| | 900 nm | 38 | 44.1 | 57.5 | 43.7 | 42.8 | 43.6 | 45.2 | 32.3 | 74.3 | 20.1 |
| | 925 nm | 38.2 | 44.3 | 58.2 | 44.1 | 42.5 | 43.8 | 44.9 | 32 | 74 | 19.4 |
| | 950 nm | 38.9 | 44.9 | 58.8 | 44.9 | 43.4 | 43.9 | 45.1 | 32.5 | 74.7 | 20.4 |
| | 975 nm | 39.3 | 44.8 | 59.4 | 45.7 | 44.1 | 44.1 | 45.2 | 33.2 | 74.1 | 19.9 |
| | 1000 nm | 39.9 | 45 | 60.1 | 46.1 | 45.7 | 44.3 | 45.9 | 34.6 | 76.2 | 21.6 |
| Transmittance fluctuation (%) | | 5.1 | 9.9 | 9.8 | 9.9 | 9.8 | 7.4 | 7.5 | 5.4 | 6.5 | 6.1 |

**Table 4 Transmittance values and transmittance fluctuation values of PC resin materials provided in Comparative Examples 1-8**

| | | Comparat ive Example 1 | Comparat ive Example 2 | Comparat ive Example 3 | Comparat ive Example 4 | Comparat ive Example 5 | Comparat ive Example 6 | Comparat ive Example 7 | Comparat ive Example 8 |
|---|---|---|---|---|---|---|---|---|---|
| Transmitta nce at different wavelengt hs | 400 nm | 87.2 | 37.5 | 52.1 | 32.1 | 37.9 | 57 | 34.2 | 4.4 |
| | 425 nm | 88.2 | 39.1 | 54.4 | 33.8 | 40.1 | 57.4 | 36.1 | 5.3 |
| | 450 nm | 88.6 | 40.2 | 55.1 | 35.3 | 42 | 56.5 | 37.8 | 5.8 |
| | 475 nm | 88.9 | 40.9 | 57.8 | 37 | 43.5 | 55.9 | 40.1 | 6.2 |
| | 500 nm | 89.3 | 41.7 | 61.8 | 37.9 | 45.3 | 54.8 | 41.7 | 6.3 |
| | 525 nm | 89.5 | 42.4 | 65.1 | 37.6 | 46.6 | 53.2 | 41.2 | 6.3 |
| | 550 nm | 89.3 | 43 | 67.6 | 36.7 | 47.8 | 53.8 | 40.1 | 6.2 |
| | 575 nm | 89.6 | 43.5 | 68.3 | 35.7 | 48.9 | 54.2 | 38.5 | 6.3 |
| | 600 nm | 89.9 | 44.1 | 66.1 | 35.2 | 49.9 | 54.8 | 37.6 | 6.3 |
| | 625 nm | 90 | 44.8 | 64.2 | 35.1 | 51 | 56.4 | 37.2 | 6.5 |
| | 650 nm | 90.1 | 45.5 | 62.7 | 36 | 52.3 | 57.3 | 38.6 | 6.6 |
| | 675 nm | 90.3 | 45.9 | 62.9 | 36 | 53.4 | 58.2 | 38.4 | 6.9 |
| | 700 nm | 90.4 | 46.8 | 62.7 | 38.1 | 54.4 | 60.1 | 41.9 | 7.2 |
| | 725 nm | 90.6 | 47.2 | 62.8 | 40.2 | 55.2 | 61.3 | 44.3 | 7.6 |
| | 750 nm | 90.8 | 47.6 | 62.1 | 41.5 | 56.1 | 62.7 | 46.5 | 7.7 |
| | 775 nm | 90.8 | 48.1 | 61.1 | 42.1 | 56.8 | 63.6 | 47.4 | 8 |
| | 800 nm | 91 | 48.4 | 60.9 | 42.4 | 57.5 | 65.1 | 47.9 | 8.1 |
| | 825 nm | 91.1 | 48.7 | 60.5 | 42.8 | 58.2 | 66.1 | 48.4 | 8.3 |
| | 850 nm | 91.2 | 49 | 60.2 | 42.9 | 58.8 | 67.4 | 48.6 | 8.9 |
| | 875 nm | 91.5 | 48.7 | 60.1 | 42.8 | 58.6 | 67.2 | 48.9 | 9.2 |
| | 900 nm | 91.5 | 49.5 | 61.8 | 43.3 | 59.8 | 69.3 | 49.1 | 9.4 |
| | 925 nm | 91.6 | 49.5 | 63.5 | 43.9 | 60 | 70 | 49.6 | 9.4 |
| | 950 nm | 91.8 | 50.1 | 66.9 | 44.2 | 60.8 | 71.3 | 49.8 | 9.9 |
| | 975 nm | 91.9 | 50.8 | 69.4 | 44.9 | 61.2 | 72 | 49.9 | 9.4 |
| | 100 0 nm | 92.7 | 51.7 | 71.8 | 46.3 | 62 | 73.2 | 50.1 | 9.1 |
| Transmittance fluctuation (%) | | 5.5 | 14.2 | 19.8 | 14.2 | 24.1 | 16.1 | 15.9 | 5.5 |

As can be seen from the above test results, the PC resin materials provided in the examples of the present invention have a good neutral filtering effect, very stable transmittance data at a spectral band of 400-1,000 nm, a transmittance of 15-60%, a good and moderate filtering effect and a transmittance fluctuation of less than 10%, and transmittance curves tend to be parallel, so that better neutral filtering can be realized. The PC resin material provided in Example 1 has an optimal neutral filtering effect, which meets the index requirements that the average transmittance at 1.0 mm is 35%, and the transmittance fluctuation is less than ±5% compared with the average transmittance. In Comparative Example 1, although the transmittance curve tends to be parallel, a pure transparent resin effect is achieved due to no addition of a specific additive, the luminous flux is strong, the risk of overexposure is caused when images are taken, and a neutral gray filtering effect is not achieved. In Comparative Example 2, due to a large particle size of CuCr₂O₄ and poor dispersibility, the transmittance fluctuation is greater than 10% at a band of 400-1,000 nm. In Comparative Example 3 and Comparative Example 4, as the ratio of CuCr₂O₄ to Cr₂O₃ is inappropriate, the transmittance fluctuation in Comparative Example 3 is greater than 15% at 460-600 nm, the transmittance in Comparative Example 4 is gradually increased at a band greater than 680 nm, the transmittance fluctuation is large, and a neutral filtering effect is not achieved. In Comparative Examples 5-6, although the ABS resin materials obtained by adding conventional carbon black and aniline black are consistent with those in examples, which are also black materials, the transmittance is gradually increased at an infrared band (760-1,000 nm), leading to large transmittance fluctuation. In Comparative Example 7, a black material obtained by adding a compound colorant of red, yellow, blue and green inorganic metal pigments has a flatter transmittance curve but poor stability than that obtained by adding carbon black and aniline black in Comparative Examples 5-6, and the transmittance fluctuation is greater than 10% at a band of 400-1,000 nm. In Comparative Example 8, as the amount of the additive is too large, the light transmittance is less than 10% at a band of 400-1,000 nm, light absorption is too strong, the material is pure black, and a neutral filtering effect is not achieved.

Persons of ordinary skill in the art shall understand that the examples are intended to facilitate understanding of the principles of the present invention by readers, which should be understood as that the scope of protection of the present invention is not limited to the special statements and examples. For persons of ordinary skill in the art, various other specific deformations and combinations can be made without departing from the essence of the present invention according to technical revelations disclosed by the present invention, and all the deformations and combinations still fall within the scope of protection of the present invention.

## Claims

1. A PC resin material with a neutral filtering effect, **characterized in** comprising the following components in parts by weight:
100 parts of polycarbonate;
0.08-1.1 parts of an antioxidant;
0.08-1.1 parts of a dispersing agent; and
0.02-0.08 part of an additive;
wherein the additive is a mixture of CuCr₂O₄ and Cr₂O₃, a weight ratio of the CuCr₂O₄ to the Cr₂O₃ in the mixture is (1-10):1, and the CuCr₂O₄ has a D50 particle size of 0.1-1.1 µm.

2. The PC resin material with a neutral filtering effect according to claim 1, **characterized in that**, the polycarbonate has a melting index of 10-20 g/10 min at a temperature of 300°C and a load of 1.2 kg, and according to an ISO 13468-2-1999 standard, the polycarbonate has a transmittance of not less than 90% at a thickness of 3 mm.

3. The PC resin material with a neutral filtering effect according to claim 1, **characterized in that**, the antioxidant comprises one or more of a phenolic antioxidant and a phosphite antioxidant.

4. The PC resin material with a neutral filtering effect according to claim 1, **characterized in that**, the dispersing agent comprises one or more of sodium dodecyl sulfate, methyl pentanol, triethylhexyl phosphate, polyacrylamide, cellulose derivatives, ethylene bis(stearamide), stearate, guar gum and fatty acid polyethylene glycol ester.

5. The PC resin material with a neutral filtering effect according to claim 1, **characterized in that**, the Cr₂O₃ in the additive has a D50 particle size of 0.3-0.8 µm.

6. The PC resin material with a neutral filtering effect according to claim 1, **characterized in that**, the CuCr₂O₄ in the additive has a D50 particle size of 0.6-0.8 µm.

7. The PC resin material with a neutral filtering effect according to claim 1, **characterized in that**, a weight ratio of the CuCr₂O₄ to the Cr₂O₃ in the additive is (8-9): 1.

8. A preparation method for the PC resin material with a neutral filtering effect according to any one of claims 1-7, **characterized in** comprising the following steps: mixing polycarbonate, antioxidant, dispersing agent and additive, and performing melt extrusion and granulation to obtain the PC resin material with a neutral filtering effect.

9. The preparation method for the PC resin material with a neutral filtering effect according to claim 8, **characterized in** comprising the following steps: mixing the polymethyl methacrylate, the antioxidant, the dispersing agent and the additive in a high-speed mixing machine for 3-5 min to obtain a uniformly mixed material; and putting the uniformly mixed material into a twin-screw extruder, and performing mixing, melting, homogenization and extrusion granulation, followed by cooling to obtain a PMMA resin material; wherein extrusion screws of the twin-screw extruder have a length-diameter ratio of (40-65): 1, a cylinder of a extruder is at 260-290°C, and a main machine has a rotation speed of 600-900 r/min.

10. Use of the PC resin material with a neutral filtering effect according to any one of claim 1-8 in preparation of optical products.
